# EUROPÄISCHE PATENTSCHRIFT

(11) **EP 3 128 721 B1**
(45) Veröffentlichungstag und Bekanntmachung des Hinweises auf die Patenterteilung: **10.01.2018**
(21) Anmeldenummer: 16001716.6
(22) Anmeldetag: 03.08.2016
(51) Int. Cl.: H04L 29/08, H04W 4/04, G01C 21/34, G01C 21/36, G07C 5/00, H04B 17/318, H04L 29/06, H04W 64/00

(54) **VERFAHREN UND SYSTEM ZUM BEREITSTELLEN VON FAHRZEUGDATEN EINES KRAFTFAHRZEUGS**
METHOD AND SYSTEM FOR PROVIDING VEHICLE DATA OF A MOTOR VEHICLE
PROCEDE ET SYSTEME DE MISE A DISPOSITION DE DONNEES DE VEHICULE AUTOMOBILE

(30) Priorität: 05.08.2015 DE 102015010204
(43) Veröffentlichungstag der Anmeldung: 08.02.2017
(73) Patentinhaber: AUDI AG, 85045 Ingolstadt (DE)
(72) Erfinder: Höbel, Christoph, DE - 85757 Karlsfeld (DE)
(74) Vertreter: Brandt, Kai

(56) Entgegenhaltungen:
- DE-A1-102013 013 329
- DE-A1-102013 210 246
- US-A1- 2011 167 128

## Beschreibung

Die Erfindung betrifft ein Verfahren und ein System zum Bereitstellen von Fahrzeugdaten eines Kraftfahrzeugs.

Bei modernen Kraftfahrzeugen werden zunehmend Möglichkeiten bereitgestellt, Fahrzeugdaten vom Kraftfahrzeug drahtlos an fahrzeugexterne Servereinrichtungen zu übermitteln, so dass ein Fahrer des Kraftfahrzeugs auf diese Fahrzeugdaten zugreifen kann, wenn er sich nicht in dem Kraftfahrzeug befindet. Beispielsweise werden derartige Fahrzeugdaten über eine Mobilfunkverbindung von dem Kraftfahrzeug an eine dafür vorgesehene fahrzeugexterne Servereinrichtung übertragen, sobald das Kraftfahrzeug geparkt worden ist.

Die Netzabdeckung eines Mobilfunknetzes kann je nach Abstellort des Kraftfahrzeugs sehr stark schwanken, so dass es vorkommen kann, dass die Fahrzeugdaten von dem Kraftfahrzeug nicht mehr an die fahrzeugexterne Servereinrichtung übertragen werden können, wenn das Kraftfahrzeug an einem Abstellort ohne Netzabdeckung geparkt worden ist.

Die US 2010/0240346 A1 zeigt ein Verfahren zur Vorhersage von Funklöchern für drahtlose Fahrzeuganwendungen. Es werden Informationen über Funklöcher eines Mobilfunknetzes bereitgestellt. Für eine angenommene Route des Kraftfahrzeugs wird anhand dieser Informationen bestimmt, wann das Fahrzeug gemäß der angenommenen Route an einem dieser Funklöcher ankommen wird. Eine drahtlose Datenübertragung für eine Fahrzeuganwendung wird derart durchgeführt, dass diese abgeschlossen ist, bevor das betreffende Funkloch mit dem Kraftfahrzeug erreicht wird.

Die DE 10 2011 118 706 A1 zeigt ein Verfahren zum Übertragen von Daten zwischen einem in einem Kraftfahrzeug angeordneten mobilen Endgerät und wenigstens einem ortsfesten Datennetzwerk. Es wird eine Geodatenbank bereitgestellt, in welcher für eine Mehrzahl von Orten und für vorbestimmte Zeitpunkte historische Werte zu Funkschnittstellenparametern gespeichert sind. Daraus werden für zukünftige Datenübertragungen voraussichtliche Werte ermittelt. Es wird eine voraussichtliche Bewegungsroute des Kraftfahrzeugs ermittelt. Erkennt ein Steuergerät, dass sich eine voraussichtliche Parkposition des Kraftfahrzeugs in einem Funkloch befindet, so teilt das Steuergerät einem Datendienst bereits während der Fahrt mit dem Kraftfahrzeug Informationen dazu mit, wo das Kraftfahrzeug am Ende der Fahrt voraussichtlich geparkt sein und wann das Kraftfahrzeug dort ankommen wird. Dadurch kann sichergestellt werden, dass die Fahrzeugposition auch dann über den Datendienst aus dem Datennetzwerk abgerufen werden kann, falls das Kraftfahrzeug in dem Funkloch geparkt werden sollte.

Die DE 10 2012 024 869 A1 zeigt ein Verfahren zum Optimieren einer Mobilfunkanwendung eines Kraftfahrzeugs. Durch eine Kommunikationseinrichtung wird die Netzabdeckung im Voraus für zumindest einen Routenabschnitt einer Fahrroute des Kraftfahrzeugs ermittelt. Dadurch soll verhindert werden, dass es nicht zu einem überraschenden Verbindungsabbruch kommt.

Die gemäß dem oben genannten Stand der Technik bekannten Vorgehensweisen haben alle gemeinsam, dass eine bestimmte Fahrtroute eines Kraftfahrzeugs bekannt oder zumindest abgeschätzt werden muss, um eine Bereitstellung von Fahrzeugdaten des betreffenden Kraftfahrzeugs über eine Mobilfunkverbindung sicherstellen zu können. Falls die Fahrtroute sich ändern sollte oder die abgeschätzte Fahrtroute falsch sein sollte, kann es vorkommen, dass Fahrzeugdaten nicht über eine Mobilfunkverbindung übertragen und bereitgestellt werden können.

Die US 2011/0167128 A1 beschreibt ein Verfahren zum Verringern des Einflusses von Funklöchern beim Autofahren. Während ein Kraftfahrzeug Funklöcher durchfährt, werden die Positionen der Funklöcher erfasst und gespeichert. Es wird eine Zeit ermittelt, bis das Kraftfahrzeug erneut eines der Funklöcher erreicht. Wenn das Kraftfahrzeug erneut in eines der zuvor erfassten Funklöcher fährt, wird die Zeit ermittelt, welche zum Durchfahren des betreffenden Funklochs erforderlich ist, indem beispielsweise die bekannten Koordinaten des Funklochs mit einer GPS-Position verglichen und eine aktuelle Durchschnittsgeschwindigkeit berücksichtigt werden. In Abhängigkeit von den ermittelten Zeiten wird beispielsweise eine Musikwiedergabe im Kraftfahrzeug so gesteuert, dass diese möglichst unterbrechungsfrei erfolgt.

Es ist daher die Aufgabe der vorliegenden Erfindung, ein Verfahren und ein System bereitzustellen, mittels welchen auf besonders zuverlässige Weise die Fahrzeugdaten über eine Mobilfunkverbindung bereitgestellt werden können.

Diese Aufgabe wird durch ein Verfahren sowie durch ein System zum Bereitstellen von Fahrzeugdaten eines Kraftfahrzeugs mit den Merkmalen der unabhängigen Patentansprüche gelöst. Vorteilhafte Ausgestaltungen mit zweckmäßigen und nicht trivialen Weiterbildungen der Erfindung sind in den abhängigen Ansprüchen angegeben.

Bei dem erfindungsgemäßen Verfahren zum Bereitstellen von Fahrzeugdaten eines Kraftfahrzeugs wird die Signalstärke einer Mobilfunkverbindung zwischen dem Kraftfahrzeug und einem Mobilfunknetz an jeweils erfassten Positionen des Kraftfahrzeugs mittels einer Steuereinrichtung des Kraftfahrzeugs erfasst. Sobald anhand der erfassten Signalstärke ermittelt wird, dass die Mobilfunkverbindung unterbrochen und das Kraftfahrzeug innerhalb einer vorgegebenen Dauer ab diesem Zeitpunkt geparkt worden ist, wird die Position des Kraftfahrzeugs, an welcher das Kraftfahrzeug zum Zeitpunkt der Unterbrechung der Mobilfunkverbindung angeordnet war als Totpunkt mittels der Steuereinrichtung gespeichert. Sobald nach dem Speichern des Totpunkts ermittelt wird, dass sich das Kraftfahrzeug bei einer erneuten Fahrt dem gespeicherten Totpunkt bis auf eine vorgegebene Entfernung genähert hat, werden vorgegebene Fahrzeugdaten des Kraftfahrzeugs mittels der Steuereinrichtung an eine fahrzeugexterne Servereinrichtung über die Mobilfunkverbindung übermittelt. Die übermittelten Fahrzeugdaten werden mittels der fahrzeugexternen Servereinrichtung anschließend bereitgestellt.

Bei der Mobilfunkverbindung kann es sich beispielsweise um eine GSM-Mobilfunkverbindung innerhalb eines GSM-Mobilfunknetzes handeln. GSM steht dabei für Global System for Mobile Communications, was ein Standard für volldigitale Mobilfunknetze ist, der hauptsächlich für Telefonie, aber auch für leitungsvermittelnde und paketvermittelnde Datenübertragungen sowie Kurzmitteilungen genutzt wird. An sich kann es sich prinzipiell um jede Art von Mobilfunkverbindung handeln.

Es ist also erfindungsgemäß vorgesehen, zu überwachen, an welchen Orten ohne Mobilfunkverbindung das Kraftfahrzeug geparkt wird. Zum Beispiel bei der täglichen Fahrt zur Arbeit kann durch Speichern dieser Positionen ohne Mobilfunkverbindung eine zukünftige Vorhersagbarkeit eines schlechten Empfangs an diesen Parkpositionen prognostiziert werden. So kann beispielsweise bei einer Annäherung an eine Tiefgarage, in welcher ein Fahrer des Kraftfahrzeugs üblicherweise in regelmäßigen Abständen parkt, bereits vor Erreichen der Tiefgarage - und somit vor Abreißen der Mobilfunkverbindung - mittels der Steuereinrichtung eine Übertragung der vorgegebenen Fahrzeugdaten an die fahrzeugexterne Servereinrichtung über die zu diesem Zeitpunkt noch bestehende Mobilfunkverbindung initiiert und durchgeführt werden. Selbst wenn das Kraftfahrzeug also an einem abgespeicherten Totpunkt geparkt werden sollte, kann ein Fahrer des Kraftfahrzeugs oder auch ein anderer Nutzer auf die vor dem Erreichen des Totpunkts an die fahrzeugexterne Servereinrichtung übertragenen Fahrzeugdaten zugreifen.

Vorzugsweise wird dafür kontinuierlich die Signalstärke der Mobilfunkverbindung zwischen dem Kraftfahrzeug und dem Mobilfunknetz an jeweils erfassten Positionen des Kraftfahrzeugs mittels der Steuereinrichtung des Kraftfahrzeugs erfasst. Sobald das Signal zum Mobilfunknetz, also die Mobilfunkverbindung, abbricht und das Fahrzeug nach diesem Zeitpunkt innerhalb eines vorgegebenen Zeitraums geparkt wird, werden diese Positionen als Totpunkte markiert. Sobald sich das Kraftfahrzeug bei späteren Fahrten einem dieser Totpunkte innerhalb eines vorgegebenen Umkreises, z.B von 1 km, nähert, werden die vorgegebenen Fahrzeugdaten des Kraftfahrzeugs mittels der Steuereinrichtung über die Mobilfunkverbindung an die fahrzeugexterne Servereinrichtung übertragen. Sollten nun nach dem Abstellen bzw. Parken des Kraftfahrzeugs keine aktuelleren Fahrzeugdaten mehr über die Mobilfunkverbindung an die fahrzeugexterne Servereinrichtung übertragen werden können, können die zuletzt an die fahrzeugexterne Servereinrichtung übertragenen Daten bereitgestellt werden.

Bei dem erfindungsgemäßen Verfahren ist es also nicht mehr notwendig, eventuelle Fahrtrouten des Kraftfahrzeugs zu kennen oder abzuschätzen. Stattdessen wird durch die erfindungsgemäße Vorgehensweise ohne Kenntnis der Fahrtroute oder Fahrtrouten des Kraftfahrzeugs eine sehr zuverlässige Vorhersagbarkeit von Unterbrechungen einer Mobilfunkverbindung zwischen dem Kraftfahrzeug und einem Mobilfunknetz an verschiedensten Parkpositionen des Kraftfahrzeugs ermöglicht.

Die vorgegebene Dauer, innerhalb welcher das Kraftfahrzeug nach Unterbrechung der Mobilfunkverbindung geparkt worden sein muss, kann beispielsweise anhand eines kontinuierlich erfassten Parkverhaltens des Fahrers oder der Fahrer des Kraftfahrzeugs festgelegt werden. Darüber hinaus kann die vorgegebene Entfernung zu dem gespeicherten Totpunkt oder den gespeicherten Totpunkten, ab welcher die vorzeitige Übermittlung der vorgegebenen Fahrzeugdaten erfolgt, beispielsweise in Abhängigkeit davon erfolgen, wie groß die Datenmenge der zu übertragenden Fahrzeugdaten ist und/oder in Abhängigkeit davon, welche Bandbreite die Mobilfunkverbindung in der Nähe der gespeicherten Totpunkte aufweist.

In vorteilhafter Ausgestaltung der Erfindung ist es vorgesehen, dass als die Fahrzeugdaten zumindest die Position des Kraftfahrzeugs übermittelt wird, an welcher sich das Kraftfahrzeug bis auf die vorgegebene Entfernung zum Totpunkt genähert hat. Darüber hinaus ist es aber auch möglich, dass als die Fahrzeugdaten weitere Daten, wie beispielsweise der Tankfüllstand des Kraftfahrzeugs, der Batterieladezustand des Kraftfahrzeugs und dergleichen an die fahrzeugexterne Servereinrichtung übertragen werden. Ein Fahrer des Kraftfahrzeugs oder auch andere berechtigte Personen können also durch Zugriff auf die fahrzeugexterne Servereinrichtung auch bei in einem Funkloch geparkten Kraftfahrzeug auf die Fahrzeugdaten zugreifen, welche kurz vor Erreichen des Funklochs noch an die fahrzeugexterne Servereinrichtung übermittelt worden sind. Dadurch kann eine besonders hohe Aktualität der abrufbaren Fahrzeugdaten sichergestellt werden. Insbesondere kann ein Fahrer des Kraftfahrzeugs die Position des Kraftfahrzeugs relativ genau orten, selbst wenn das Kraftfahrzeug beispielsweise in einer Tiefgarage abgestellt worden sein sollte, in welcher keine Mobilfunkverbindung besteht. Denn die zuletzt übermittelte Position des Kraftfahrzeugs, an welcher sich das Kraftfahrzeug bis auf die vorgegebene Entfernung zum Totpunkt genähert hat, kann in diesem Fall beispielsweise der Einfahrtsbereich der Tiefgarage sein.

Eine weitere vorteilhafte Ausführungsform der Erfindung sieht vor, dass die mittels der fahrzeugexternen Servereinrichtung bereitgestellten Fahrzeugdaten an eine mobile Kommunikationseinrichtung übertragen werden. Beispielsweise kann ein Fahrer des Kraftfahrzeugs auf seinem Smartphone eine entsprechende Applikation, kurz üblicherweise als App. bezeichnet, installiert haben, mittels welcher er über eine Mobilfunkverbindung die Fahrzeugdaten von der fahrzeugexternen Servereinrichtung abrufen kann. Insbesondere wenn keine direkte Übertragung bzw. kein direktes Abrufen der Fahrzeugdaten mittels des Smartphones vom Kraftfahrzeug möglich sein sollte, weil dieses gerade in einem Funkloch geparkt ist, ist es dennoch möglich, die relativ aktuellen Fahrzeugdaten von der fahrzeugexternen Servereinrichtung abzurufen.

Gemäß einer weiteren vorteilhaften Ausführungsform der Erfindung ist es vorgesehen, dass falls zum Zeitpunkt der ermittelten Unterbrechung der Mobilfunkverbindung kein satellitenbasiertes Signal zur Positionserfassung des Kraftfahrzeugs zur Verfügung steht, die Position des Kraftfahrzeugs anhand eines zuvor vorhandenen satellitenbasierten Signals und eines Odometers des Kraftfahrzeugs bestimmt wird. Sollte sich das Kraftfahrzeug beispielsweise in der Nähe einer Einfahrt einer Tiefgarage befinden, wo nur ein unzureichendes oder gar kein satellitenbasiertes Signal zur Positionserfassung des Kraftfahrzeugs zur Verfügung stehen sollte, ist es so dennoch möglich, die Position des Kraftfahrzeugs besonders exakt zu bestimmen. Dafür kann beispielsweise ein satellitenbasiertes Signal herangezogen werden, welches einige Meter zuvor noch exakt genug war, um die Position des Kraftfahrzeugs zu bestimmen. Ausgehend von dieser Position und in Kombination des Odometers des Kraftfahrzeugs kann dann auch die exakte Position des Kraftfahrzeugs beispielsweise in einem Eingangsbereich einer Tiefgarage noch bestimmt werden.

Eine weitere vorteilhafte Ausführungsform der Erfindung sieht vor, dass der Totpunkt gelöscht wird, sobald der gespeicherte Totpunkt mittels des Kraftfahrzeugs erneut angefahren und ermittelt wird, dass eine Mobilfunkverbindung an diesem Totpunkt besteht. Sollte beispielsweise aufgrund eines Netzausbaus nachträglich an dem gespeicherten Totpunkt doch eine Mobilfunkverbindung des Kraftfahrzeugs mit einem Mobilfunknetz möglich sein, so wird der zuvor gespeicherte Totpunkt gelöscht. Beispielsweise könnte es sein, dass der Fahrer sein Kraftfahrzeug täglich auf einen bestimmten Parkplatz geparkt hat, auf welchem bis vor kurzem noch keine Mobilfunkverbindung zu dem Mobilfunknetz gegeben war. Sollte ein neuer Mobilfunkmast in der Nähe aufgebaut worden sein, so kann dies zur Folge haben, dass dann neuerdings eine Mobilfunkverbindung zu dem Mobilfunknetz an dem besagten Parkplatz aufgebaut werden kann. In einem derartigen Fall wird dann der zuvor gespeicherte Totpunkt gelöscht, so dass immer eine aktuelle Datenbasis hinsichtlich der Funklöcher vorliegt. Unnötige Vorab-Datenübertragungen an die fahrzeugexterne Servereinrichtung können dadurch reduziert werden.

Eine weitere vorteilhafte Ausführungsform der Erfindung sieht vor, dass der gespeicherte Totpunkt gelöscht wird, sobald ermittelt wird, dass der gespeicherte Totpunkt innerhalb von einer vorgegebenen Anzahl von Fahrten mit dem Kraftfahrzeug nicht mehr angefahren worden ist. Beispielsweise könnte es sein, dass der Fahrer des Kraftfahrzeugs seine Arbeitsstätte gewechselt hat. Hatte er zuvor noch in einer bestimmten Tiefgarage seiner vorherigen Arbeitsstätte immer an Werktagen geparkt, so wird er dies zukünftig nicht mehr tun. In einem derartigen Fall ist es sinnvoll, den dazugehörenden Totpunkt wiederum zu löschen, da es sehr unwahrscheinlich ist, dass der Fahrer des Kraftfahrzeugs diesen Totpunkt wieder anfahren und sein Kraftfahrzeug dort abstellen wird. Gespeicherte Totpunkte werden mit anderen Worten also wieder gelöscht, sobald festgestellt wird, dass nach einer gewissen Anzahl von Fahrzyklen diese Totpunkte nicht mehr angefahrne worden sind. Dadurch kann ebenfalls verhindert werden, dass unnötig Fahrzeugdaten bei einer Annäherung an diese nicht mehr relevanten Totpunkte an die fahrzeugexterne Servereinrichtung übertragen werden.

Gemäß einer weiteren vorteilhaften Ausführungsform der Erfindung ist es vorgesehen, dass zum Ermitteln, ob das Kraftfahrzeug geparkt worden ist, überprüft wird, ob eine Zündung des Kraftfahrzeugs deaktiviert worden ist. Dadurch kann auf einfache Weise ermittelt werden, ob das Fahrzeug tatsächlich geparkt und abgestellt worden ist oder ob das Kraftfahrzeug gegebenenfalls nur kurz angehalten worden ist.

Das erfindungsgemäße System zum Bereitstellen von Fahrzeugdaten eines Kraftfahrzeugs umfasst eine fahrzeugexterne Servereinrichtung sowie zumindest ein Kraftfahrzeug mit einer Steuereinrichtung. Die Steuereinrichtung ist dazu ausgebildet, die Signalstärke einer Mobilfunkverbindung zwischen dem Kraftfahrzeug und einem Mobilfunknetz an jeweils erfassten Positionen des Kraftfahrzeugs zu erfassen. Zudem ist die Steuereinrichtung dazu ausgebildet, sobald anhand der erfassten Signalstärke ermittelt wird, dass die Mobilfunkverbindung unterbrochen und das Kraftfahrzeug innerhalb einer vorgegebenen Dauer ab diesem Zeitpunkt geparkt worden ist, die Position des Kraftfahrzeugs, an welcher das Kraftfahrzeug zum Zeitpunkt der Unterbrechung der Mobilfunkverbindung angeordnet war als Totpunkt zu speichern. Ferner ist die Steuereinrichtung dazu ausgelegt, vorgegebene Fahrzeugdaten des Kraftfahrzeugs an die fahrzeugexterne Servereinrichtung über die Mobilfunkverbindung zu übermitteln, sobald nach dem Speichern des Totpunkts ermittelt wird, dass sich das Kraftfahrzeug bei einer erneuten Fahrt dem gespeicherten Totpunkt bis auf eine vorgegebene Entfernung genähert hat. Die fahrzeugexterne Servereinrichtung ist dazu ausgebildet, die übermittelten Fahrzeugdaten bereitzustellen. Vorteilhafte Ausgestaltungen des erfindungsgemäßen Verfahren sind als vorteilhafte Ausgestaltungen des erfindungsgemäßen Systems anzusehen, wobei das System insbesondere Mittel zur Durchführung der Verfahrensschritte aufweist.

Weitere Vorteile, Merkmale und Einzelheiten der Erfindung ergeben sich aus der nachfolgenden Beschreibung bevorzugter Ausführungsbeispiele sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- Fig. 1: eine schematische Darstellung eines Systems zum Bereitstellen von Fahrzeugdaten eines Kraftfahrzeugs, wobei das System eine fahrzeugexterne Servereinrichtung, zumindest ein Kraftfahrzeug und eine mobile Kommunikationseinrichtung aufweist; und in
- Fig. 2: eine schematische Darstellung des Kraftfahrzeugs während dieses sich einem Totpunkt nähert, welcher einem Funkloch innerhalb eines Mobilfunknetzes entspricht.

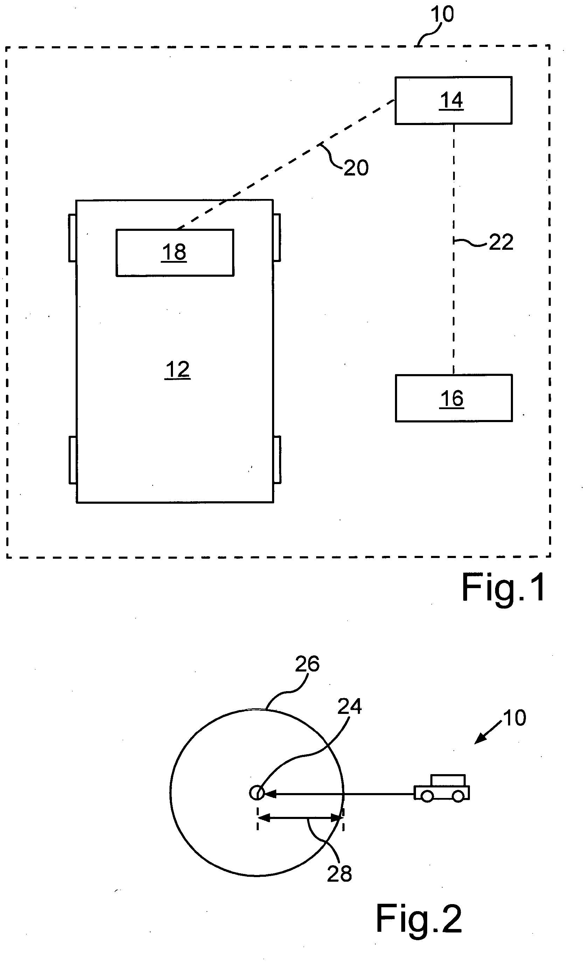

Ein System 10 zum Bereitstellen von Fahrzeugdaten eines Kraftfahrzeugs ist in einer schematischen Darstellung in Fig. 1 gezeigt. Das System 10 umfasst zumindest ein Kraftfahrzeug 12, eine fahrzeugexterne Servereinrichtung 14 sowie eine mobile Kommunikationseinrichtung 16, bei welcher es sich beispielsweise um ein Smartphone handeln kann. Das Kraftfahrzeug 12 umfasst des Weiteren eine Steuereinrichtung 18. Die Steuereinrichtung 18 ist dazu ausgebildet, die Signalstärke einer Mobilfunkverbindung 20 zwischen dem Kraftfahrzeug 12 und einem Mobilfunknetz an jeweils erfassten Positionen des Kraftfahrzeugs 12 zu erfassen.

Das Kraftfahrzeug 12 kann beispielsweise ein hier nicht dargestelltes Kommunikationsmodul aufweisen, mittels welchem die Mobilfunkverbindung 20 zu dem Mobilfunknetz, beispielsweise einem GSM-Mobilfunknetz, aufgebaut und aufrechterhalten werden kann, solange dies die Netzabdeckung des Mobilfunknetzes zulässt. Darüber hinaus kann das Kraftfahrzeug 12 zur Positionserfassung des Kraftfahrzeugs 12 auch eine hier nicht dargestellte Positionserfassungseinrichtung aufweisen, welche beispielsweise satellitensignalbasiert arbeitet und darüber hinaus auch beispielsweise noch ein Odometer aufweisen kann. Mittels des Odometers ist es möglich, bei temporär nicht vorhandenen Satellitensignalen dennoch die Position des Kraftfahrzeugs 12 relativ genau zu bestimmen. Die Positionserfassungseinrichtung und das besagte Kommunikationsmodul können informationstechnisch mit der Steuereinrichtung 18 gekoppelt sein, so dass die Steuereinrichtung 18 fortlaufend die Signalstärke der Mobilfunkverbindung 20 des Kraftfahrzeugs 12, genauer des Kommunikationsmoduls, an jeweils erfassten Positionen des Kraftfahrzeugs 12 erfassen kann.

Die Steuereinrichtung 18 ist darüber hinaus dazu ausgebildet, sobald anhand der erfassten Signalstärke ermittelt wird, dass die Mobilfunkverbindung 20 unterbrochen und das Kraftfahrzeug 12 innerhalb einer vorgegebenen Dauer ab diesem Zeitpunkt geparkt worden ist, die Position des Kraftfahrzeugs 12, an welcher das Kraftfahrzeug 12 zum Zeitpunkt der Unterbrechung der Mobilfunkverbindung angeordnet war als Totpunkt zu speichern. Ferner ist die Steuereinrichtung 18 dazu ausgebildet, vorgegebene Fahrzeugdaten des Kraftfahrzeugs 12 an die fahrzeugexterne Servereinrichtung 14 über die Mobilfunkverbindung 20 zu übermitteln, sobald nach dem Speichern des Totpunkts ermittelt wird, dass sich das Kraftfahrzeug 12 bei einer erneuten Fahrt dem gespeicherten Totpunkt bis auf eine vorgegebene Entfernung genähert hat. Die fahrzeugexternen Servereinrichtung 14 ist dazu ausgebildet, die übermittelten Fahrzeugdaten bereitzustellen, so dass diese beispielsweise ebenfalls über eine Mobilfunkverbindung 22 mittels der mobilen Kommunikationseinrichtung 16 abgerufen werden können.

Nachfolgend wird ein Verfahren zum Betreiben des Systems 10 näher erläutert. Wann immer das Kraftfahrzeug 12 fortbewegt wird, wird die Signalstärke der Mobilfunkverbindung 20 zwischen dem Kraftfahrzeug 12 und dem Mobilfunknetz an jeweils erfassten Positionen des Kraftfahrzeugs 12 mittels der Steuereinrichtung 18 erfasst. Sobald anhand der erfassten Signalstärke ermittelt wird, dass die Mobilfunkverbindung 20 unterbrochen und das Kraftfahrzeug 12 innerhalb einer vorgegebenen Dauer ab diesem Zeitpunkt geparkt worden ist, wird die entsprechende Position des Kraftfahrzeugs 12, an welcher das Kraftfahrzeug 12 zum Zeitpunkt der Unterbrechung der Mobilfunkverbindung 20 angeordnet war als Totpunkt mittels der Steuereinrichtung 18 gespeichert.

Wann immer also der Fahrer des Kraftfahrzeugs 12 einen Ort anfahren sollte, an welchem keine Mobilfunkverbindung 20 mehr zwischen dem Kraftfahrzeug 12 und dem Mobilfunknetz gegeben ist, und somit also auch keine Verbindung zwischen der Steuereinrichtung 18 und der fahrzeugexternen Servereinrichtung 14 über die Mobilfunkverbindung 20 möglich ist, wird diese Position als Totpunkt gespeichert, sofern nach dem Anfahren des Totpunkts bzw. Funklochs erfasst worden ist, dass das Kraftfahrzeug 12 danach geparkt worden ist.

Mit zunehmender Zeitdauer wird also nach und nach eine Art digitale Karte mit einer Vielzahl von Totpunkten aufgebaut, an welchen der Fahrer des Kraftfahrzeugs 12 das Kraftfahrzeug 12 üblicherweise parkt und keine Mobilfunkverbindung 20 zwischen dem Kraftfahrzeug 12 und dem Mobilfunknetz besteht. Um zu entscheiden, ob das Kraftfahrzeug 12 nach Erfassen eines Funklochs auch tatsächlich geparkt worden ist, wird überprüft, ob eine Zündung des Kraftfahrzeugs 12 deaktiviert worden ist. Dadurch kann auf besonders einfache und zuverlässige Weise ermittelt werden, ob das Kraftfahrzeug 12 geparkt worden ist.

Sobald sich das Kraftfahrzeug 12 bei einer Fahrt einem bereits gespeicherten Totpunkt bis auf eine vorgegebene Entfernung nähern sollte, werden vorgegebene Fahrzeugdaten des Kraftfahrzeugs 12 vorsorglich an die fahrzeugexterne Servereinrichtung 14 über die Mobilfunkverbindung 20 mittels der Steuereinrichtung 18 übermittelt. Denn sobald sich das Kraftfahrzeug 12 einem der gespeicherten Totpunkte annähert, ist es relativ wahrscheinlich, dass das Kraftfahrzeug 12 auch demnächst geparkt werden wird, wo keine Mobilfunkverbindung 20 mehr besteht. Als die Fahrzeugdaten können beispielsweise die Position des Kraftfahrzeugs 12 aber auch weitere Daten, wie beispielsweise ein Tankfüllstand, ein Batterieladezustand und dergleichen an die fahrzeugexterne Servereinrichtung 14 übertragen werden. Sollte das Kraftfahrzeug 12 also beispielsweise regelmäßig in einer Tiefgarage abgestellt werden, in welcher keine Mobilfunkverbindung 20 zwischen dem Kraftfahrzeug 12 und der Servereinrichtung 14 aufgebaut werden kann, so kann der Fahrer des Kraftfahrzeugs 12 dennoch auf relativ aktuelle Fahrzeugdaten zurückgreifen, da diese kurz vor Erreichen der Tiefgarage an die fahrzeugexterne Servereinrichtung 14 übermittelt werden.

In Fig. 2 ist einer dieser besagten Totpunkte 24 schematisch dargestellt. Darüber hinaus ist ein Umkreis 26 um den Totpunkt 24 schematisch dargestellt. Sobald das Kraftfahrzeug 12 also in diesen Umkreis 26 gelangen sollte, wird die besagte vorgegebene Entfernung 28 zu dem hier schematisch dargestellten Totpunkt 24 unterschritten. Sobald das Kraftfahrzeug 12 in den Umkreis 26 hinein fährt, werden die vorgegebenen Fahrzeugdaten mittels der Steuereinrichtung 18 über die Mobilfunkverbindung 20 an die fahrzeugexterne Servereinrichtung 14 übertragen.

Zuvor gespeicherte Totpunkte 24 werden wieder gelöscht, sobald diese Totpunkte 24 mittels des Kraftfahrzeugs 12 erneut angefahren werden und dabei ermittelt wird, dass eine Mobilfunkverbindung 20 an diesem Totpunkt 24 besteht. Beispielsweise kann es aufgrund eines Netzausbaus dazu kommen, dass an bestimmten Positionen, an denen in der Vergangenheit zuvor keine Mobilfunkverbindung 20 vorhanden war, inzwischen jedoch die Mobilfunkverbindung 20 an diesen Positionen aufgebaut werden kann. In diesem Fall ist es sinnvoll, die davon betroffenen gespeicherten Totpunkte 24 zu löschen.

Die gespeicherten Totpunkte 24 werden ebenfalls gelöscht, sobald ermittelt wird, dass die betreffenden Totpunkte 24 innerhalb von einer vorgegebenen Anzahl von Fahrten mit dem Kraftfahrzeug 12 nicht mehr angefahren worden sind. Alternativ oder zusätzlich ist es auch möglich, dass entsprechende Totpunkte 24, die zuvor gespeichert worden sind, gelöscht werden, sobald ermittelt wird, dass diese Totpunkte 24 innerhalb eines vorgegebenen Zeitraums nach dem Abspeichern der betreffenden Totpunkte 24 mittels des Kraftfahrzeugs 12 nicht mehr angefahren worden sind.

Dies kann beispielsweise der Fall sein, wenn der Fahrer des Kraftfahrzeugs 12 seinen Arbeitsplatz gewechselt haben sollte. Hat er zuvor noch in einer bestimmten Tiefgarage seines vorherigen Arbeitgebers geparkt, so wird er dies zukünftig nicht mehr tun. Sollte sich der Fahrer des Kraftfahrzeugs 12 nach dem Arbeitsplatzwechsel in die Nähe der Tiefgarage begeben, so ist es unwahrscheinlich, dass er sein Kraftfahrzeug 12 auch dort abstellen wird. Insofern ist ein mit dieser Tiefgarage korrespondierender Totpunkt 24 auch nicht mehr relevant und kann gelöscht werden.

Mittels des erfindungsgemäßen Verfahrens und Systems 10 ist es also möglich, das wiederholte Abstellen bzw. Parken des Kraftfahrzeugs 12 an bestimmten Orten ohne Mobilfunkverbindung 20 zu erfassen und rechtzeitig die Fahrzeugdaten an die fahrzeugexterne Servereinrichtung 14 zu übermitteln, bevor das Kraftfahrzeug 12 in Funklöchern geparkt wird. Dadurch kann sichergestellt werden, dass insbesondere ein Fahrer des Kraftfahrzeugs 12 für ihn relevante und aktuelle Fahrzeugdaten auch dann über den fahrzeugexternen Server 14 abrufen kann, falls er sein Kraftfahrzeug 12 in einem Funkloch abgestellt haben sollte.

## Patentansprüche

1. Verfahren zum Bereitstellen von Fahrzeugdaten eines Kraftfahrzeugs (12), bei welchem die Signalstärke einer Mobilfunkverbindung (20) des Kraftfahrzeugs (12) mit einem Mobilfunknetz an jeweils erfassten Positionen des Kraftfahrzeugs (12) mittels einer Steuereinrichtung (18) des Kraftfahrzeugs (12) erfasst wird,
**gekennzeichnet durch** die Schritte:
- sobald anhand der erfassten Signalstärke ermittelt wird, dass die Mobilfunkverbindung (20) unterbrochen und das Kraftfahrzeug (12) innerhalb einer vorgegebenen Dauer ab diesem Zeitpunkt geparkt worden ist: Speichern der Position des Kraftfahrzeugs (12), an welcher das Kraftfahrzeug (12) zum Zeitpunkt der Unterbrechung der Mobilfunkverbindung (20) angeordnet war als Totpunkt mittels der Steuereinrichtung (18);
- Übermitteln von vorgegebenen Fahrzeugdaten des Kraftfahrzeugs (12) an eine fahrzeugexterne Servereinrichtung (14) über die Mobilfunkverbindung (20) mittels der Steuereinrichtung (18), sobald nach dem Speichern des Totpunkts ermittelt wird, dass sich das Kraftfahrzeug (12) bei einer erneuten Fahrt dem gespeicherten Totpunkt (24) bis auf eine vorgegebene Entfernung (28) genähert hat;
- Bereitstellen der übermittelten Fahrzeugdaten mittels der fahrzeugexternen Servereinrichtung (14).

2. Verfahren nach Anspruch 1,
**dadurch gekennzeichnet, dass**
als die Fahrzeugdaten zumindest die Position des Kraftfahrzeugs (12) übermittelt wird, an welcher sich das Kraftfahrzeug (12) bis auf die vorgegebene Entfernung (28) dem Totpunkt (24) genähert hat.

3. Verfahren nach Anspruch 1 oder 2,
**dadurch gekennzeichnet, dass**
die mittels der fahrzeugexternen Servereinrichtung (14) bereitgestellten fahrzeugbezogenen Daten an eine mobile Kommunikationseinrichtung (16) übertragen werden.

4. Verfahren nach einem der vorhergehenden Ansprüche,
**dadurch gekennzeichnet, dass**
falls zum Zeitpunkt der ermittelten Unterbrechung der Mobilfunkverbindung (20) kein satellitenbasiertes Signal zur Positionserfassung des Kraftfahrzeugs (12) zur Verfügung steht, die Position des Kraftfahrzeugs (12) anhand eines zuvor vorhandenen satellitenbasierten Signals und eines Odometers des Kraftfahrzeugs (12) bestimmt wird.

5. Verfahren nach einem der vorhergehenden Ansprüche,
**dadurch gekennzeichnet, dass**
der Totpunkt (24) gelöscht wird, sobald der gespeicherte Totpunkt (24) mittels des Kraftfahrzeugs (12) erneut angefahren und ermittelt wird, dass eine Mobilfunkverbindung (20) an diesem Totpunkt (24) besteht.

6. Verfahren nach einem der vorhergehenden Ansprüche,
**dadurch gekennzeichnet, dass**
der gespeicherte Totpunkt (24) gelöscht wird, sobald ermittelt wird, dass der gespeicherte Totpunkt (24) innerhalb von einer vorgegebenen Anzahl von Fahrten mit dem Kraftfahrzeug (12) nicht mehr angefahren worden ist.

7. Verfahren nach einem der vorhergehenden Ansprüche,
**dadurch gekennzeichnet, dass**
zum Ermitteln, ob das Kraftfahrzeug (12) geparkt worden ist, überprüft wird, ob eine Zündung des Kraftfahrzeugs(12) deaktiviert worden ist.

8. System (10) zum Bereitstellen von Fahrzeugdaten eines Kraftfahrzeugs (12), umfassend
- eine fahrzeugexterne Servereinrichtung (14);
- zumindest ein Kraftfahrzeug (12) mit einer Steuereinrichtung (18), welche dazu ausgebildet ist, die Signalstärke einer Mobilfunkverbindung (20) des Kraftfahrzeugs (12) mit einem Mobilfunknetz an jeweils erfassten Positionen des Kraftfahrzeugs (12) zu erfassen;
**dadurch gekennzeichnet, dass**
- die Steuereinrichtung (18) dazu ausgelegt ist,
▪ sobald anhand der erfassten Signalstärke ermittelt wird, dass die Mobilfunkverbindung (20) unterbrochen und das Kraftfahrzeug (12) innerhalb einer vorgegebenen Dauer ab diesem Zeitpunkt geparkt worden ist, die Position des Kraftfahrzeugs (12), an welcher das Kraftfahrzeug (12) zum Zeitpunkt der Unterbrechung der Mobilfunkverbindung (20) angeordnet war als Totpunkt (24) zu speichern;
▪ vorgegebene Fahrzeugdaten des Kraftfahrzeugs (12) an die fahrzeugexterne Servereinrichtung (14) über die Mobilfunkverbindung (20) zu übermitteln, sobald nach dem Speichern des Totpunkts (24) ermittelt wird, dass sich das Kraftfahrzeug (12) bei einer erneuten Fahrt dem gespeicherten Totpunkt (24) bis auf eine vorgegebene Entfernung (28) genähert hat;
- die fahrzeugexterne Servereinrichtung (14) dazu ausgebildet ist, die übermittelten Fahrzeugdaten bereitzustellen.

## Claims

1. Method to provide vehicle data of a motor vehicle (12) in which the signal strength of a mobile communications connection (20) of the motor vehicle (12) having a mobile communications network is detected at respectively detected positions of the motor vehicle (12) by means of a control device (18) of the motor vehicle (12),
**characterised by** the steps:
- as soon as it is detected by means of the detected signal strength that the mobile communications connection (20) has been interrupted and the motor vehicle (12) has been parked within a predetermined duration from this point in time: storing the position of the motor vehicle (12) at which the motor vehicle (12) was arranged at the point in time of the interruption of the mobile communications connection (20) as a dead point by means of the control device (18);
- transmitting predetermined vehicle data of the motor vehicle (12) to a vehicle-external server device (14) via the mobile communications connection (20) by means of the control device (18), as soon as it is determined after storing the dead point that the motor vehicle (12) has come within a predetermined distance (28) of the stored dead point (24) during a new journey;
- providing the transmitted vehicle data by means of the vehicle-external server device (14).

2. Method according to claim 1,
**characterised in that**
at least the position of the motor vehicle (12) at which the motor vehicle (12) has come within the predetermined distance (28) of the dead point (24) is transmitted as the vehicle data.

3. Method according to claim 1 or 2,
**characterised in that**
the vehicle-related data provided by means of the vehicle-external server device (14) is transferred to a mobile communications device (16).

4. Method according to any one of the preceding claims,
**characterised in that** if,
at the point in time of the determined interruption of the mobile communications connection (20), no satellite-based signal is available for position detection of the motor vehicle (12), the position of the motor vehicle (12) is determined by means of a previously present satellite-based signal and an odometer of the motor vehicle (12).

5. Method according to any one of the preceding claims,
**characterised in that**
the dead point (24) is deleted as soon as the stored dead point (24) is newly driven to by means of the motor vehicle (12) and it is determined that a mobile communications connection (20) exists at this dead point (24).

6. Method according to any one of the preceding claims,
**characterised in that**
the stored dead point (24) is deleted as soon as it is determined that the stored dead point (24) has no longer been driven to within a predetermined number of journeys with the motor vehicle (12).

7. Method according to any one of the preceding claims,
**characterised in that**,
to determine whether the motor vehicle (12) has been parked, it is checked whether an ignition of the motor vehicle (12) has been deactivated.

8. System (10) to provide vehicle data of a motor vehicle (12), comprising
- a vehicle-external server device (14);
- at least one motor vehicle (12) having a control device (18) which is formed to detect the signal strength of a mobile communications connection (20) of the motor vehicle (12) having a mobile communications network at respectively detected positions of the motor vehicle (12);
**characterised in that**
- the control device (18) is designed,
- as soon as it is determined by means of the detected signal strength that the mobile communications connection (20) has been interrupted and the motor vehicle (12) has been parked within a predetermined duration from this point in time, to store the position of the motor vehicle (12) at which the motor vehicle (12) was arranged at the point in time of the interruption of the mobile communications connection (20) as a dead point (24);
- to transmit predetermined vehicle data of the motor vehicle (12) to the vehicle-external server device (14) via the mobile communications connection (20), as soon as it is determined after storing the dead point (24) that the motor vehicle (12) has come within a predetermined distance (28) of the stored dead point (24) during a new journey;
- the vehicle-external server device (14) is formed to provide the transmitted vehicle data.

## Revendications

1. Procédé de mise à disposition de données de véhicule d'un véhicule automobile (12), dans lequel l'intensité de signal d'une liaison de radiocommunication mobile (20) du véhicule automobile (12) avec un réseau de radiocommunication mobile est détectée au niveau de positions respectivement détectées du véhicule automobile (12) au moyen d'un dispositif de commande (18) du véhicule automobile (12), **caractérisé par** les étapes :
- dès qu'on détermine à l'aide de l'intensité de signal détectée que la liaison de radiocommunication mobile (20) a été interrompue et que le véhicule automobile (12) a été garé pendant une durée prédéterminée à partir de cet instant : mémorisation en tant que point mort, au moyen du dispositif de commande (18), de la position du véhicule automobile (12) au niveau de laquelle se situait le véhicule automobile (12) à l'instant de l'interruption de la liaison de radiocommunication mobile (20) ;
- transmission de données de véhicule prédéterminées du véhicule automobile (12) à un dispositif serveur (14), externe au véhicule, par l'intermédiaire de la liaison de radiocommunication mobile (20) au moyen du dispositif de commande (18) dès que, après la mémorisation du point mort, on a déterminé que le véhicule automobile (12) s'est approché, lors d'un nouveau trajet, du point mort mémorisé (24) jusqu'à une distance prédéterminée (28) ;
- mise à disposition des données de véhicule transmises au moyen du dispositif serveur (14) externe au véhicule.

2. Procédé selon la revendication 1, **caractérisé en ce que**, comme données de véhicule, on transmet au moins la position du véhicule automobile (12) au niveau de laquelle le véhicule automobile (12) s'est approché du point mort (24) jusqu'à la distance prédéterminée (28).

3. Procédé selon la revendication 1 ou 2, **caractérisé en ce que** les données se rapportant au véhicule mises à disposition au moyen du dispositif serveur (14) externe au véhicule sont transmises à un dispositif de communication mobile (16).

4. Procédé selon l'une des revendications précédentes, **caractérisé en ce que**, si aucun signal basé sur le système satellitaire en vue de la détection de position du véhicule automobile (12) n'est disponible à l'instant de l'interruption déterminée de la liaison de radiocommunication mobile (20), la position du véhicule automobile (12) est déterminée à l'aide d'un signal basé sur le système satellitaire existant antérieurement et au moyen d'un odomètre du véhicule automobile (12).

5. Procédé selon l'une des revendications précédentes, **caractérisé en ce que** le point mort (24) est effacé dès que le point mort (24) mémorisé est à nouveau atteint au moyen du véhicule automobile (12) et qu'on détermine qu'il existe une liaison de radiocommunication mobile (20) au niveau de ce point mort (24).

6. Procédé selon l'une des revendications précédentes, **caractérisé en ce que** le point mort (24) mémorisé est effacé dès qu'on détermine que le point mort (24) mémorisé n'a plus été atteint en un nombre prédéterminé de trajets avec le véhicule automobile (12).

7. Procédé selon l'une des revendications précédentes, **caractérisé en ce que**, pour déterminer si le véhicule automobile (12) a été garé, on vérifie si un système d'allumage du véhicule automobile (12) a été désactivé.

8. Système (10) destiné à mettre à disposition des données de véhicule d'un véhicule automobile (12), comprenant
- un dispositif serveur (14) externe au véhicule ;
- au moins un véhicule automobile (12) avec un dispositif de commande (18) qui est conçu pour détecter l'intensité de signal d'une liaison de radiocommunication mobile (20) du véhicule automobile (12) avec un réseau de radiocommunication mobile au niveau de positions respectivement détectées du véhicule automobile (12) ;
**caractérisé en ce que**
- le dispositif de commande (18) est conçu pour
-- dès qu'on a déterminé à l'aide de l'intensité de signal détectée que la liaison de radiocommunication mobile (20) a été interrompue et que le véhicule automobile (12) a été garé pendant une durée prédéterminée à partir de cet instant, mémoriser en tant que point mort (24) la position du véhicule automobile (12) au niveau de laquelle le véhicule automobile (12) était situé à l'instant de l'interruption de la liaison de radiocommunication mobile (20) ;
-- transmettre des données de véhicule prédéterminées du véhicule automobile (12) au dispositif serveur (14) externe au véhicule par l'intermédiaire de la liaison de radiocommunication mobile (20) dès qu'on a déterminé, après la mémorisation du point mort (24), que le véhicule automobile (12) s'est approché, lors d'un nouveau trajet, du point mort mémorisé (24) jusqu'à une distance prédéterminée (28) ;
- le dispositif serveur (14) externe au véhicule est conçu pour mettre à disposition les données de véhicule transmises.
